# EUROPEAN PATENT APPLICATION

(11) **EP 3 866 031 A1**
(43) Date of publication of application: **18.08.2021**
(21) Application number: 18937092.7
(22) Date of filing: 06.12.2018
(51) Int. Cl.: G06F 16/957

(54) **WEBPAGE LOADING METHOD, INTERMEDIATE SERVER, AND WEBPAGE LOADING SYSTEM**

(30) Priority: 18.10.2018 CN 201811214791
(71) Applicant: Wangsu Science & Technology Co., Ltd., Shanghai 201800 (CN)
(72) Inventor: CHEN, Long, Shanghai 201800 (CN)
(74) Representative: De Arpe Tejero, Manuel
(86) International application number: PCT/CN2018/119601
(87) International publication number: WO 2020/077765

(57) **Abstract**

Embodiments of the present disclosure relate to the field of Internet and disclose a webpage loading method, an intermediate server, and a webpage loading system. In the present disclosure, the webpage loading method is applied to the intermediate server, and the webpage loading method includes: upon receiving a page loading request from a user terminal, acquiring a loading list corresponding to a page according to the loading request, where the loading list includes a plurality of asynchronous loading elements; adding a scheduling script to the loading list, where the scheduling script is configured to simulate a loading process of the page after loading of the page is completed, and execute the asynchronous loading elements in the simulated loading process; and feeding back the loading list with the added scheduling script to the user terminal, to allow the user terminal to request each loading element on the loading list to perform the page loading, so as to improve webpage loading speed.

## Description

### FIELD OF DISCLOSURE

The present disclosure generally relates to the field of Internet, more particularly, relates to the webpage loading technology.

### BACKGROUND

A page generally includes multiple resources, such as HTML, JS (JavaScript), CSS (Cascading Style Sheet), and images. A script is an extension of a batch file and is a program stored as plain text. In general, a computer script program is a determined combination of a series of operations that control the calculation and operation of a computer, in which certain logic branching may be implemented.

In the way that a JS script works in a browser, by default, when a script is encountered, the browser needs to stop and wait for the script to finish execution before the browser can build the page. This means that the files are loaded and executed one by one. If it takes too long for JavaScript to load or execute, a large number of subsequent resource requests will be blocked, resulting in extended time in loading a page. This will affect the time of execution by the browser. When the page structure is improper and a JS script is placed early for loading, the initial screen will show up really slow, the pictures will not come out, and a blank screen will be displayed for a long time. Therefore, the user experience is poor.

### BRIEF SUMMARY OF THE DISCLOSURE

The objective of the embodiments of the present disclosure is to provide a webpage loading method, an intermediate server, and a webpage loading system, which help improve webpage loading speed.

To solve the above technical problems, the embodiments of the present disclosure provides a webpage loading method applied to an intermediate server. The method includes: upon receiving a page loading request from a user terminal, acquiring a loading list corresponding to a page according to the loading request, where the loading list includes a plurality of asynchronous loading elements; adding a scheduling script to the loading list, where the scheduling script is configured to simulate a loading process of the page after loading of the page is completed, and execute the asynchronous loading elements in the simulated loading process; and feeding back the loading list with the added scheduling script to the user terminal, to allow the user terminal to request each loading element on the loading list to perform the page loading.

Embodiments of the present disclosure further provide an intermediate server, which includes: at least one processor; and a memory communicatively coupled to the at least one processor; where the memory stores instructions executable by the at least one processor, the instructions being executed by the at least one processor to cause the at least one processor to implement the above-described webpage loading method.

Embodiments of the present disclosure further provide a webpage loading system, which includes a user terminal and an intermediate server as described above.

Embodiments of the present disclosure further provide a computer-readable storage medium storing a computer program, where the computer program, when executed by a processor, implements the above-described webpage loading method.

Compared to the existing technologies, the main difference and the effects of the disclosed embodiments lie in that: by adding a scheduling script to the original loading list, the execution of the asynchronous loading elements in the loading list is postponed. Specifically, after the page loading is completed, a series of page loading procedures are simulated again, so that each asynchronous loading element is executed in the simulated loading process. Since each asynchronous loading element has its original execution timing, just executing asynchronous loading elements after the page loading is completed may lead to the page rendering process to be reset or postponed, which results in a blank screen with very limited content to be observed by a user. It can be seen that, while improving the page loading speed, the webpage loading method, the intermediate server and the webpage loading system in the disclosed embodiments may also allow the asynchronous loading elements to be smoothly executed, thereby avoiding the incompatibility problem that occurs in the existing page loading optimization processes. In addition, the disclosed embodiments innovatively improve the established website optimization models in the relevant art, without requiring to change the configuration of a user terminal, the code of a source station, or the website architecture of the to-be-accessed source station, and thus is convenient to implement. This reduces the technology development time for a website holder, and provides a user terminal with a better online experience, thereby facilitating the promotion of the embodiments of the present disclosure.

As a further improvement, after acquiring the loading list corresponding to the page according to the loading request and before feeding back the loading list with the added scheduling script to the user terminal, the method further includes: replacing a string representing a type of asynchronous loading elements with a preset string; and adding the scheduling script to the loading list further includes adding the scheduling script to the loading list after replacing the string representing the type of asynchronous loading elements with the preset string, where the scheduling script is further configured to identify the asynchronous loading elements by using the preset string before executing the asynchronous loading elements in the simulated loading process. This implementation may prevent a browser from parsing asynchronous loading elements when loading a page for the first time.

As a further improvement, the scheduling script is specifically configured to simulate the page loading process by rewriting a document state in the loading list and by registering and triggering a preset event. This implementation clearly defines a way to simulate the page loading process.

As a further improvement, the asynchronous loading elements include a defer type and a non-defer type, and the scheduling script is further configured to: after execution of non-defer type of asynchronous loading elements is completed, execute defer type of asynchronous loading elements. This implementation clearly defines the timing for execution of the two types of asynchronous loading elements, which further minimizes the incompatibility problem.

As a further improvement, the scheduling script is specifically configured to: execute the non-defer type of asynchronous loading elements after setting a current document state to readyState=loading and after registering and triggering a window.onload event; and execute the defer-type of asynchronous loading elements after setting the current document state to readyState=interactive and after triggering an onreadystatechange event. This implementation further defines the timing for execution of the two types of asynchronous loading elements, which further minimizes the incompatibility problem.

As a further improvement, the scheduling script is specifically configured to intercept a first type of preset events before rewriting the document state of the loading list. This implementation prevents a page from re-rendering after the page loading is completed for the first time, which further prevents a blank screen phenomenon during the execution of asynchronous loading elements.

As a further improvement, the first type of preset events include one or any combintions of: a document.onreadystatechange event, a window.onload event, and a document.body.onload event. This implementation clearly defines events that are to be intercepted.

As a further improvement, before adding the scheduling script to the loading list, the method further includes: determining whether to use an optimization service; and if it is determined to use an optimization service, adding the scheduling script to the loading list. This implementation determines that the step of adding the scheduling script to the loading list is only needed until it is determined that the optimization is necessary, which makes the disclosed embodiments to comply more with realistic situations.

As a further improvement, the method further includes: saving the loading list locally when the loading list corresponding to the page is acquired according to the loading request, and after feeding back the loading list with the added scheduling script to the user terminal, the method further includes: determining whether a to-be-loaded page is loaded correctly on the user terminal; and if it is determined that the to-be-loaded page is loaded incorrectly on the user terminal, sending an original loading list without the added scheduling script to the user terminal. This implementation more comprehensively monitors the page loading conditions. When there is an incompatibility problem, the original loading list may be fed back for re-loading the page, to prevent the loading errors.

### BRIEF DESCRIPTION OF THE DRAWINGS

One or more embodiments of the present disclosure will be exemplified with reference to the accompanying drawings. These exemplifications are not to be constructed as a limitation to the embodiments of the present disclosure. In the companying drawing, elements with like reference numbers refer to like or similar elements. Unless specifically stated, the figures in the accompanying drawings do not constitute a scale limitation.
FIG. 1 is a flowchart of a webpage loading method according to one embodiment;
FIG. 2 is a flowchart of another webpage loading method according to one embodiment;
FIG. 3 is an overall workflow of a webpage loading system according to one embodiment;
FIG. 4 is a flowchart of a general rendering process in a browser according to one embodiment;
FIG. 5 is a flowchart of the execution of a scheduling script according to one embodiment; and
FIG. 6 is a schematic structural diagram of an intermediate server according to one embodiment.

### DETAILED DESCRIPTION

To make the objective, technical solutions, and advantages of the embodiments of the present disclosure clearer, the various embodiments of the present disclosure will be made in detail hereinafter with reference to the accompanying drawings. It is to be understood by those skilled in the art that: in the various embodiments of the present disclosure, numerous technical details are set forth in order to provide a reader with a better understanding of the present disclosure. However, even without these technical details and various changes and modifications based on the following embodiments, the technical solutions claimed in the present disclosure may still be implemented.

Embodiment 1 of the present disclosure relates to a webpage loading method.

The disclosed embodiment is applied to an intermediate server (may be referred to as "server" hereinafter). An intermediate server may a server in the network for transmitting data, which receives a request sent by a client terminal and then transmits the request to the backend (i.e., a source station server) to obtain a backend response. After receiving the backend response, the intermediate server sends the response content to the frontend (i.e., the client terminal) in an appropriate format. For instance, a CDN node is a very typical intermediate server. The data required for the response by a CDN node are all generated by the backend, which may be merely cached on the CDN node. A load balancing server is another very typical intermediate server, which is configured to receive requests form client terminals and distribute the requests among a plurality of backend servers. A proxy server is also an intermediate server. A proxy server is responsible for forwarding a request to the actual backend server. As can be seen, in real applications there are many different kinds of intermediate servers, which are not enumerated here one-by-one.

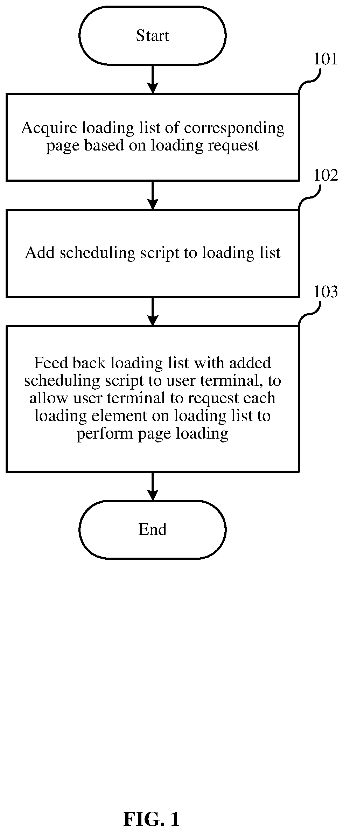

A flowchart of a webpage loading method consistent with the disclosed embodiment is shown in FIG. 1, details of which are as follows:
Step 101: Acquire a loading list of a corresponding page according to a loading request.

Specifically, in this step, when a page loading request from a user terminal is received, a loading list of the corresponding page is acquired according to the loading request. More specifically, in real applications, the loading list may be an HTML document, which includes a plurality of asynchronous loading elements. The disclosed embodiment will be illustrated by using JS scripts as an example of asynchronous loading elements. In real applications, in addition to the asynchronous loading elements, there are also HTML, CSS, and images in the loading list, which are not enumerated here one-by-one.

Step 102: Add a scheduling script to the loading list.

Specifically, a scheduling script is configured to simulate a page loading process after the page loading is completed, and execute the asynchronous loading elements during the simulated page loading process. The page loading process in the disclosed embodiment mainly refers to the process of browser rendering.

Step 103: Feed back the loading list with the added scheduling script to a user terminal, to allow the user terminal to perform the page loading according to each loading element on the loading list.

Specifically, after receiving the loading list, the user terminal may immediately perform the parsing process, the execution process and so on, without requiring to change the operation flow of the browser itself. The scheduling script in the loading list will complete the simulation of the page loading process and the call and execution of the JS scripts.

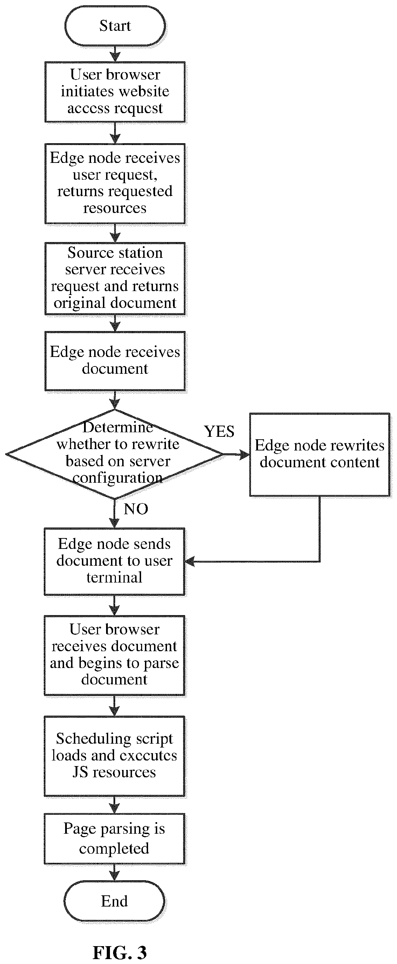

It should be noted that the foregoing Steps 101 to 103 are related to the main process executed on the intermediate server. The disclosed embodiment continues to illustrate the overall workflow of the webpage loading system in real applications by using an edge node as the intermediate server and a user browser as the user terminal as an example. The flowchart is shown in FIG. 3. Specifically, first, a user browser initiates a website access request to an edge node. After receiving the user request, the edge node requests the resources from the source station server. After receiving the resources request, the source station server returns the original HTML document (i.e., the loading list). After receiving the HTML document, the edge node determines whether to rewrite the HTML document according to the server configuration. That is, the edge node determines whether to use the optimization service. Specifically, the edge node may determine whether to use the optimization service according to the request address in the loading request. If it is determined to use the optimization service, the edge node will rewrite the content of the HTML document. That is, if it is determined to use the optimization service, the edge node adds a scheduling script to the HTML document, and then sends the rewritten HTML document to the user browser. If it is determined not to use the optimization service, the original HTML document is directly sent to the user browser. After receiving the HTML document, the user browser parses the received HTML document. In the parsing process, the scheduling script will load and execute the JS scripts until the parsing is completed. It can be seen that FIG. 3 illustrates the whole process for a browser to load a page.

In addition, if the execution of JS scripts in the loading list is simply postponed in order to improve the loading speed of the page, the timing for execution of the JS scripts will be disrupted. In the existing loading processes, the timing for loading each to-be-loaded element is designated. Arbitrary change of the timing for loading each element may lead to unsuccessful loading or cause errors in other already-loaded elements. Therefore, the applicant of the present disclosure proposes to re-simulate the page loading process after the page loading is completed. In this way, the JS scripts are still loaded in the original loading cycle, which will not lead to disruption or cause other unknown errors.

It can be seen that compared to the existing technologies, the main difference and the effects of the disclosed embodiment lie in that: by adding a scheduling script to the original loading list, the execution of the asynchronous loading elements in the loading list is postponed. Specifically, after the page loading is completed, a series of page loading procedures are simulated again, so that each asynchronous loading element is executed in the simulated loading process. Since each asynchronous loading element has its original execution timing, just executing asynchronous loading elements after the page loading is completed may lead to the page rendering process to be reset or postponed, which results in a blank screen with very limited content to be observed by a user. It can be seen that, while improving the page loading speed, the webpage loading method in the disclosed embodiment may also allow the asynchronous loading elements to be smoothly executed, thereby avoiding the incompatibility problem that occurs in the existing page loading optimization processes. In addition, the disclosed embodiment innovatively improves the established website optimization models in the relevant art, without requiring to change the configuration of a user terminal, the code of a source station, or the website architecture of the to-be-accessed source station, and thus is convenient to implement. This reduces the technology development time for a website holder, and provides a user terminal with a better online experience, thereby facilitating the promotion of the embodiments of the present disclosure.

Embodiment 2 of the present disclosure relates to a webpage loading method. Embodiment 2 is substantially the same as Embodiment 1. The main difference lies in that: in Embodiment 2 of the present disclosure, an asynchronous loading element rewriting step is added, to prevent a browser from parsing the asynchronous loading elements when the page is loaded for the first time.

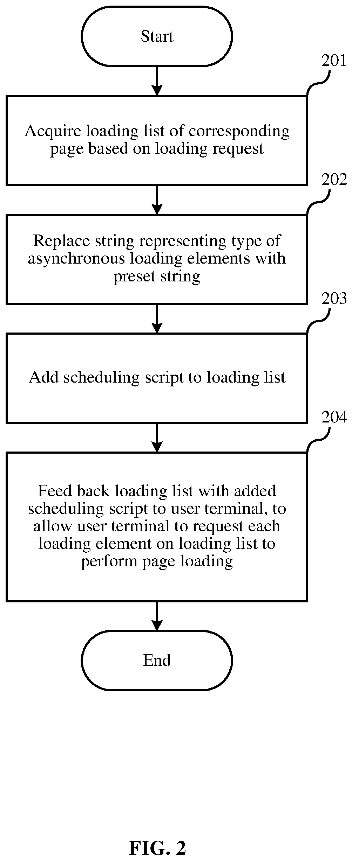

A flowchart of a webpage loading method consistent with the disclosed embodiment is shown in FIG. 2, the details of which are as follows:

Step 201 is similar to Step 101 in Embodiment 1, details of which are not described again here.

Step 202: Replace a string representing a type of asynchronous loading elements with a preset string.

Specifically, taking a JS script as an example, the string corresponding to the type attribute of a JS script is "javascript". When the browser parses a loading list, once a string representing this "javascript" type is encountered, it can be recognized that it is a JS script, which then results in a time-consuming parsing process.

In the disclosed embodiment, "javascript" is rewritten as a preset string, such as "comet", so that the browser cannot recognize a JS script. Specific examples are as follows:
(1) Normal script: <script type="text/javascript"></script> is rewritten as:
   <script type="comet_text/comet"></script>
(2) Defer script: <script type="text/javascript" defer></script> is rewritten as:
   <script type="comet_text/comet" defer></script>

In addition, except that the "javascript" in the above inline tags needs to be changed, the "javascript" in the external link tags may also be rewritten. The specific examples are as follows:
(1) Normal script: <script type="text/javascript" src="xxx"></script> is rewritten as:
   <script type="comet_text/comet" src="xxx"></script>
(2) Defer script: <script type="text/javascript" src="xxx" defer></script> is rewritten as:
   <script type="comet_text/comet" src="xxx" defer></script>

It should be also noted that the preset string is used to identify a JS script based on a new agreement. Therefore, after rewriting, the scheduling script may use the preset string to identify the original JS scripts when the asynchronous loading elements need to be executed. This ensures the JS scripts to be successfully executed.

Step 203 is similar to Step 102 in Embodiment 1, details of which are not described again here. In addition, the execution order of the foregoing Steps 202 and 203 may be set according to actual requirements. In real applications, Step 203 for adding the scheduling script may be executed first, and then Step 202 for rewriting the string representing a type of asynchronous loading elements is performed. Therefore, the execution order of Steps 202 and 203 is not limited here.

Step 204 is similar to Step 103 in Embodiment 1, details of which are not described again here.

It can be seen that the webpage loading method in the disclosed embodiment may prevent a browser from parsing the asynchronous loading elements when a page is first loaded, thereby reducing the loading time of the initial screen as much as possible.

Embodiment 3 of the present disclosure relates to a webpage loading method. A specific execution process for the scheduling script is provided in this embodiment.

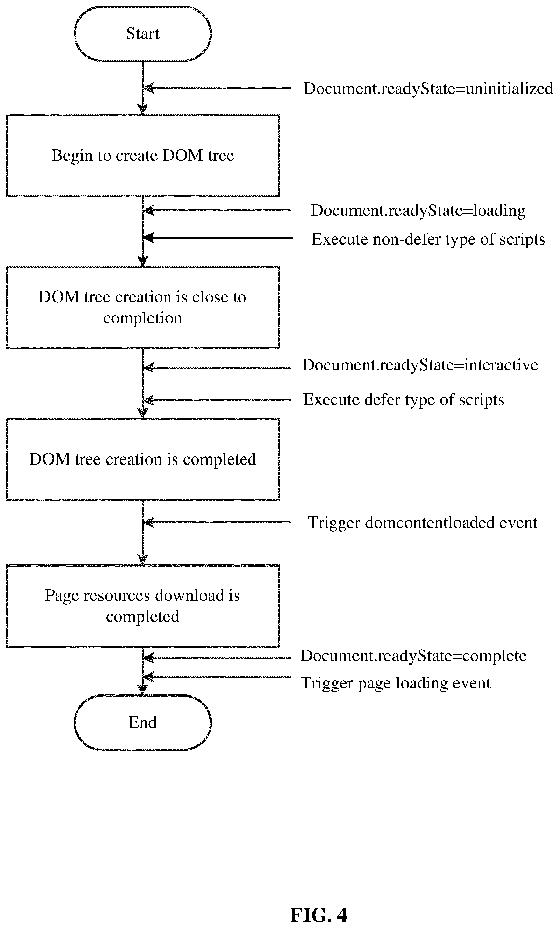

A general browser rendering process is shown in FIG. 4. During the entire rendering process, the HTML document (hereinafter referred to as "document") state includes four states, that is, the Document.ready State attribute has four different values: uninitialized (loading not started yet), loading (loading in progress), interactive (loaded, a user can start to interact with the document), complete (loading completed). Specific events may be also triggered at each specific stage. The scheduling script in the disclosed embodiment is specifically configured to rewrite the document state of the loading list, register and trigger preset events, thereby simulating the page loading process.

Further, since a DOM tree needs to be created during the webpage loading process, the relationship between the DOM tree and the simulated page loading process in the present disclosure is now outlined: after the loading process is started, first set the attribute of Document.readyState to "uninitialized"; then begin to create the DOM tree, and set the attribute of Document.readyState to "loading"; next, execute the non-defer type of scripts and set the attribute of Document.readyState to "interactive" when the creation of the DOM tree is close to completion; next, execute the defer type of scripts; after the creation of the DOM tree is completed, trigger a domcontentloaded event; after the page resources are downloaded, set the attribute of Document.readyState to "complete", and then trigger a page loading event, thereby completing the entire page loading process.

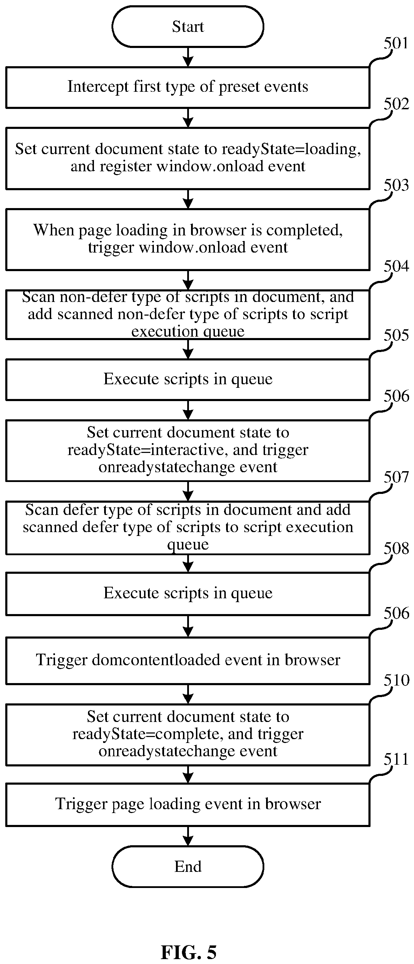

A flowchart of execution of the scheduling script consistent with the disclosed embodiment may be as shown in FIG. 5, details of which are as follows:
Step 501: Intercept a first type of preset events.

Specifically, the first type of preset events may include one or any combination of the following: document.onreadystatechange (change of document state) event, window.onload (page loading completed) event, document.body.onload (document loading completed) event. Since a monitoring script may exist in the original HTML document, after a foregoing event is detected, the to-be-loaded page is re-rendered. Therefore, intercepting the above events may further prevent the blank screen of a webpage and improve the compatibility of the scheduling script.

It should be noted that, in real applications, an HTML document provided by the source station server may not include a monitoring script for the above events. Accordingly, Step 501 may be not executed by the scheduling script. That is, Step 501 may be an unnecessary step.

Step 502: Set the current document state to readyState=loading (document state as "loading"), and register a window.onload (page loading completed) event.

Specifically, this step rewrites the state of the HTML document, that is, to simulate the loading process for the page that is originally loaded, and load each JS script in the loading list subsequently.

Step 503: Trigger the window.onload event when the browser page loading is completed.

Step 504: Scan non-defer type of scripts in the document and added them to a script execution queue.

Specifically, the asynchronous loading elements include corresponding defer type and non-defer type, where the defer type is represented by "defer", and the non-defer type means that the type of scripts that do not contain "defer" in a string. Therefore, when scanning, by scanning "defer", it may be determined whether a script is a defer type of script.

It should be noted that the present embodiment may be used in combination with Embodiment 2. That is, the attributes of the asynchronous loading elements are rewritten in advance, and a preset string is used for the string replacement during the rewriting process. Then, when performing the scanning in the current step, the preset string may be used to scan, so as to determine whether a loading element is an asynchronous loading element.

For example, if the preset string is "comet", the "javascript" is replaced with "comet" in advance, to prevent the browser from parsing the "javascript" when the page is loaded for the first time. Next, in Step 504, the to-be-executed asynchronous loading elements may be identified by using "comet".

Step 505: Execute the scripts in the queue.

Specifically, the scripts in the queue may be executed in sequence according to the time of scripts being added to the queue.

It should be noted that the foregoing Steps 502 to 504 execute the non-defer type of asynchronous loading elements after setting the current document state to readyState=loading and after registering and triggering a window.onload event.

Step 506: Set the current document state to readyState=interactive (the state of the document is "loaded", a user can start to interact with the document), and trigger an onreadystatechange (document state change) event.

Step 507: Scan defer type of scripts in the document and add the defer type of scripts to the script execution queue.

Step 508: Execute scripts in the queue.

Specifically, the scripts in the queue are executed in sequence according to the time of scripts being added to the queue.

It should be also noted that the foregoing Steps 506 to 508 execute the defer type of asynchronous loading elements after setting the current document state to readyState=interactive and after triggering the onreadystatechange event.

It should be also noted that, in the disclosed embodiment, after the execution of non-defer type of asynchronous loading elements is completed, the defer type of asynchronous loading elements are then executed. This ensures that different types of asynchronous loading elements are all accurately executed.

Step 509: Trigger a DomContentLoaded event in the browser.

Step 510: Set the current document state to readyState=complete, and trigger an onreadystatechange event.

Step 511: Trigger a page loading event in the browser.

Specifically, at this point, the parsing of the scripts for the page ends. After each asynchronous loading element is loaded, the remaining stage in the loading process continues to be simulated to avoid the page re-rendering problem.

It is to be noted that the applicant of the present disclosure started testing simultaneously using two test machines and the testing covered 159 websites. The testing respectively tests the domcontentloaded (HTML document fully loaded and parsed) time and page loading (page resources successfully loaded) time for accelerated and un-accelerated scenarios. And the website compatibility index for the accelerated scenario is also calculated. The test results are shown in Tables 1-3 below:

**Table 1 - Average Optimization Rate for Accelerated Scenario**

| | domcontentloaded | pageload |
|---|---|---|
| Average Optimization Rate | 24.8% | 33.8% |

**Table 2 - Acceleration Effect for Accelerated Scenario**

| | Optimization Rate > 0% (Number of Websites) | Optimization Rate > 50% (Number of Websites) |
|---|---|---|
| domcontentloaded | 127 | 64 |
| pageload | 127 | 36 |

**Table 3 - Compatibility Index for Accelerated Scenario**

| Number of Verified Websites | Number of Websites in Normal (no script error) | Compatibility Index |
|---|---|---|
| 159 | 159 | 100% |

It can be seen that the average optimization rate, the acceleration effect, and the compatibility index for the accelerated scenario all demonstrate that the embodiments of the present disclosure not only have an excellent acceleration effect, but also greatly improve the compatibility index, thereby satisfying the requirements for product launch.

In the disclosed embodiment, a specific simulation process of the scheduling script is defined, and corresponding types of asynchronous loading elements are executed in specific processes, so that all of the asynchronous loading elements may be accurately executed, which also avoids, as much as possible, a to-be-loaded page to be rendered again after the first loading is completed.

Embodiment 4 of the present disclosure relates to a webpage loading method. Embodiment 4 is further improved on the basis of Embodiment 1. The main improvement lies in that: in Embodiment 4 of the present disclosure, the original loading list returned by the source station server is saved in the intermediate server, so that when the same page loading request is received subsequently, it can be directly processed without requiring to request the loading list again from the source station server, thereby reducing the page loading process and accelerating the page loading speed.

Specifically, in the disclosed embodiment, after acquiring the loading list of the corresponding page, the loading list is saved locally. The locally saved loading list may be periodically updated, so that when a user terminal requests the loading list next time, the loading list may be directly provided to the user terminal without requiring to request from the source station again.

In some embodiments of the present disclosure, after the loading list is fed back to the user terminal, the method further includes: determining whether the to-be-loaded page is loaded correctly on the user terminal; if it is determined that the to-be-loaded page is loaded incorrectly, sending the original loading list without the added scheduling script to the user terminal.

Specifically, in real applications, a monitoring script pre-added in the original loading list may be used to determine whether the to-be-loaded page is loaded correctly on the user terminal.

The steps of the foregoing various methods are divided merely for the purpose of clear description. In the implementations, these steps may be combined into one step or a certain step may be split and decomposed into a plurality of steps, all of which are within the protection scope of the present disclosure, as long as the same logical relationship is included. The addition of trivial modifications to an algorithm or process, or the introduction of an insignificant design, without changing the core design of the algorithm and process, is still with the scope of the protection of the present disclosure.

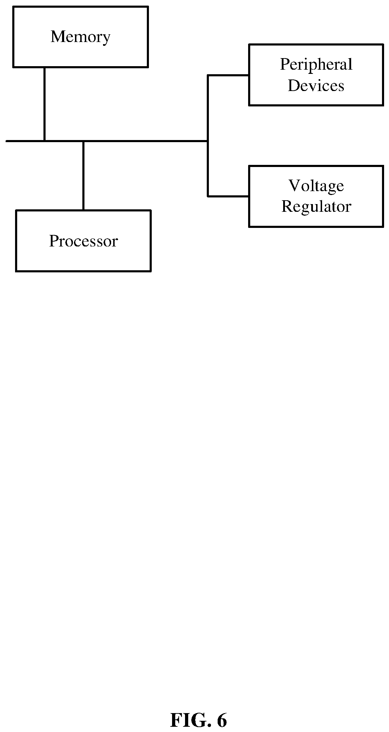

Embodiment 5 of the present disclosure relates to an intermediate server. As shown in FIG. 6, the intermediate server includes:
at least one processor and a memory communicatively coupled to the at least one processor. The memory stores instructions executable by the at least one processor. The instructions, when executed by the at least one processor, cause the at least one processor to implement any of the webpage loading methods as described in Embodiment 1 to Embodiment 4.

The memory and the processor are connected via a bus. The bus may include any number of interconnected buses and bridges. The bus connects the various circuits of one or more processors and memories. The bus may also connect various other circuits, such as peripheral devices, voltage regulator, and power management circuits, which are all well known in the art and therefore will not be further described again here. A bus interface provides an interface between the bus and a transceiver. A transceiver may be an element or a plurality of elements, such as a plurality of receivers and transmitters, which provide means for communicating with various other devices on a transmission medium. The data processed by the processor is transmitted over a wireless medium via an antenna. Further, the antenna also receives the data and transmits the data to the processor.

The processor is responsible for managing the bus and general processing, as well as providing various functions including timing, peripheral interfacing, voltage regulating, power management, and other control functions. The memory may be used to store data used by the processor when performing certain operations.

Embodiment 6 of the present disclosure relates to a webpage loading system, which specifically includes: a user terminal and an intermediate server as described in Embodiment 5.

It is not difficult to see that this embodiment is a system embodiment corresponding to Embodiment 5. This embodiment may include the technical solutions of Embodiment 5, and the related technical details described in Embodiment 5 remain valid in the present embodiment. In order to reduce repetition, these technical details and technical solutions are not repeated again here.

Embodiment 7 of the present disclosure relates to a computer-readable storage medium. The computer-readable storage medium stores a computer program that, when executed, implements the above-described method-related embodiments.

A person skilled in the art may understand that all or part of the steps of the foregoing embodiments may take the form of implementation of programs for instructing relevant hardware. The programs may be stored in a storage medium, and include a series of instructions that enable a device (may be a microcontroller, a chip, etc.) or a processor to perform all or part of the steps of each embodiment of the present disclosure. The storage medium includes various media for storing program code, such as a flash drive, a mobile hard drive, a read-only memory (ROM), a random access memory (RAM), a magnetic disk, or an optical disk, and the like.

A person skilled in the art may understand that the foregoing embodiments are merely specific embodiments for implementing the present disclosure. In real applications, various modifications may be made in the form and details of these embodiments without departing from the spirit and principle of the present disclosure.

## Claims

1. A webpage loading method applied to an intermediate server, the method comprising:
upon receiving a page loading request from a user terminal, acquiring a loading list corresponding to a page according to the loading request, wherein the loading list includes a plurality of asynchronous loading elements;
adding a scheduling script to the loading list, wherein the scheduling script is configured to simulate a loading process of the page after loading of the page is completed, and execute the asynchronous loading elements in the simulated loading process; and
feeding back the loading list with the added scheduling script to the user terminal, to allow the user terminal to request each loading element on the loading list to perform the page loading.

2. The webpage loading method according to claim 1, wherein, after acquiring the loading list corresponding to the page according to the loading request and before feeding back the loading list with the added scheduling script to the user terminal, the method further includes:
replacing a string representing a type of asynchronous loading elements with a preset string; and
wherein adding the scheduling script to the loading list further includes adding the scheduling script to the loading list after replacing the string representing the type of asynchronous loading elements with the preset string, wherein
the scheduling script is further configured to identify the asynchronous loading elements by using the preset string before executing the asynchronous loading elements in the simulated loading process.

3. The webpage loading method according to claim 1, wherein the scheduling script is further configured to simulate the page loading process by rewriting a document state in the loading list and by registering and triggering a preset event.

4. The webpage loading method according to claim 3, wherein the asynchronous loading elements include defer type and non-defer type, and the scheduling script is further configured to:
after execution of non-defer type of asynchronous loading elements is completed, execute defer type of asynchronous loading elements.

5. The webpage loading method according to claim 4, wherein the scheduling script is further configured to:
execute the non-defer type of asynchronous loading elements after setting a current document state to readyState=loading and after registering and triggering a window.onload event; and
execute the defer-type of asynchronous loading elements after setting the current document state to readyState=interactive and after triggering an onreadystatechange event.

6. The webpage loading method according to claim 3, wherein the scheduling script is further configured to intercept a first type of preset events before rewriting the document state of the loading list.

7. The webpage loading method according to claim 6, wherein the first type of preset events include one or more from a group of: a document.onreadystatechange event, a window.onload event, and a document.body.onload event.

8. The webpage loading method according to claim 1, wherein an asynchronous loading element is a JS script.

9. The webpage loading method according to claim 1, wherein, before adding the scheduling script to the loading list, the method further includes:
determining whether to use an optimization service; and
if it is determined to use the optimization service, adding the scheduling script to the loading list.

10. The webpage loading method according to claim 9, wherein determining whether to use the optimization service further includes:
determining whether to use the optimization service based on a request address in the page loading request.

11. The webpage loading method according to claim 1, further comprising:
saving the loading list locally when the loading list corresponding to the page is acquired according to the loading request.

12. The webpage loading method according to claim 11, wherein, after feeding back the loading list with the added scheduling script to the user terminal, the method further includes:
determining whether a to-be-loaded page is loaded correctly on the user terminal; and
if it is determined that the to-be-loaded page is loaded incorrectly on the user terminal, sending an original loading list without the added scheduling script to the user terminal.

13. An intermediate server, comprising:
at least one processor; and
a memory communicatively coupled to the at least one processor; wherein
the memory stores instructions executable by the at least one processor, the instructions being executed by the at least one processor to cause the at least one processor to implement the webpage loading method according to any one of claims 1 to 12.

14. A webpage loading system, comprising: a user terminal and the intermediate server according to claim 13.

15. A computer-readable storage medium storing a computer program, wherein the computer program is executed by a processor to implement the webpage loading method according to any one of claims 1 to 12.
